# EUROPÄISCHE PATENTSCHRIFT

(11) **EP 2 881 209 B1**
(45) Veröffentlichungstag und Bekanntmachung des Hinweises auf die Patenterteilung: **13.12.2023**
(21) Anmeldenummer: 14183643.7
(22) Anmeldetag: 05.09.2014
(51) Int. Cl.: B23K 9/173, B23K 9/32, B23K 9/29

(54) **Verfahren zum automatisierten Austauschen eines Brennerverschleißteils eines Schweißroboters sowie Verwendung einer Anlage zur Durchführung eines solchen Verfahrens**
Method for the automated replacement of a wearing burner component of a welding robot as well as the use of a system for executing the method
Méthode d'échange automatisé d'une pièce d'usure de brûleur d'un robot de soudage et l'utilisation d'une installation pour la réalisation de la méthode

(30) Priorität: 13.09.2013 DE 102013218409
(43) Veröffentlichungstag der Anmeldung: 10.06.2015
(73) Patentinhaber: Carl Cloos Schweisstechnik GmbH, 35708 Haiger (DE)
(72) Erfinder: Schol, Hans-Joachim, 35708 Haiger (DE); Pittner, Stephan, 35767 Breitscheid (DE); Stiehl, Albrecht, 35708 Haiger (DE); Buss, Andreas, 35745 Herborn (DE)
(74) Vertreter: Lippert Stachow Patentanwälte Rechtsanwälte

(56) Entgegenhaltungen:
- WO-A1-2004/039528
- DE-C1- 19 600 309
- JP-A- 2000 094 147
- JP-A- 2010 089 125
- JP-A- 2013 094 795
- KR-A- 20090 091 259
- US-B2- 7 439 471

## Beschreibung

Die Erfindung betrifft allgemein ein Verfahren zum automatisierten Austauschen eines Verschleißteils des Schweißbrenners eines Schweißroboters, insbesondere der Stromdüse zum Lichtbogenschweißen sowie das Verwenden einer Anlage zur Durchführung eines solchen Verfahrens.

Eine bekannte Anlage umfasst einen Schweißroboter mit einem mehrachsigen Roboterarm sowie eine Wartungsstation, die sich im Arbeitsbereich des Roboterarms befindet. Der Schweißbrenner (nachfolgend kurz: Brenner) des Schweißroboters wird vom Endglied des Roboterarms getragen. Solche Anlagen weisen weiterhin eine Wartungsstation zum automatisierten Austauschen von einem oder von mehreren Verschleißteilen des Brenners auf. Hierzu umfasst die Wartungsstation zumindest eine Halterung zum automatisierten Abnehmen und Anbringen des bzw. der Verschleißteile, beispielsweise der Stromdüse eines Brenners zum Lichtbogenschweißen.

Die Stromdüse ist ein typisches Verschleißteil. Sie führt den Schweißdraht und gewährleistet den elektrischen Kontakt für den Lichtbogen. Insbesondere bei hohen Schweißleistungen unterliegt die Stromdüse durch Reibung relativ starkem Verschleiß und muss regelmäßig ausgetauscht werden, damit der Kontakt und die präzise Führung gewährleistet bleiben. Anlagen zum automatisierten Austauschen der Stromdüse sind beispielsweise aus dem US-Patent US 7,439,471 oder der japanischen Patentanmeldung JP 2010-089125 vorbekannt.

Bei der Anlage aus JP 2010-089125 ist neben der Wartungsstation ein zusätzlicher Handlingroboter vorgesehen, welcher zum Entladen von und Bestücken mit Verschleißteilen mit der Wartungsstation zusammenwirkt. Für jede Gruppe zu wartender Schweißroboter, beispielsweise für je zwei Schweißroboter, muss somit ein zusätzlicher Industrieroboter vorgesehen werden. Sie bringt erheblichen Mehraufwand und insbesondere höhere Investitionskosten mit sich, sie erlaubt dafür den Austausch der Stromdüse und der Gasdüse des Brenners.

Die Anlage aus der US 7,439,471 erlaubt nur das Auswechseln der Stromdüse und beruht auf dem Ansatz, die erforderlichen Komponenten zur Automatisierung des Verschleißteileaustauschs möglichst weitestgehend in die Wartungsstation zu integrieren. Bei dieser Lösung ist demnach kein zusätzlicher Handlingroboter erforderlich. Die Wartungsstation ist jedoch sehr aufwändig und muss entweder beweglich gestaltet oder aber für jeden zu erwartenden Schweißroboter fest zugeordnet, d.h. in entsprechend großer Anzahl vorgesehen werden. Neben einer derartigen Wartungsstation mit hohem Automatisierungsgrad ist demnach auch die Stückzahl bzw. die Verstellbarkeit kostenintensiv. Die Wartungsstation ist durch den Automatisierungsgrad selbst wiederum wartungsanfällig.

In Anbetracht der vorbenannten Nachteile ist es mithin eine Aufgabe der vorliegenden Erfindung mit geringerem Aufwand den automatisierten Austausch von einem oder mehreren Verschleißteilen eines Schweißroboters, insbesondere des Brenners, zu ermöglichen.

Diese Aufgabe wird gelöst durch ein Verfahren gemäß Anspruch 1 sowie durch das Verwenden einer Anlage zur Durchführung eines solchen Verfahrens nach Anspruch 2.

Zwar offenbaren JP 2000094147 A, JP 2013094795 A, KR 20090091259 A und DE 196 00 309 C1 jeweils Schweißroboter zum Lichtbogenschweißen, umfassend einen mehrachsigen Roboterarm mit einem Endglied sowie einen vom Endglied getragenen Brenner mit einer Stromdüse zur mechanischen Führung des Schweißdrahtes sowie einer Gasdüse zur Zuführung von Schutzgas, wobei am Roboterarm ein Robotergreifer vorgesehen ist. Keines der vorgenannten Dokumente offenbart eine Wartungsstation. Aber keines der Dokumente gibt auch nur einen Hinweis darauf, dass der am Roboterarm dafür vorgesehen oder auch nur dazu geeignet sein könnte, im Zusammenhang mit dem automatisierten Austauschen von Brennerverschleißteilen verwendet zu werden.

Das erfindungsgemäße Verfahren ist ausgebildet zum automatisierten Austauschen mindestens eines Verschleißteils des Brenners eines Schweißroboters, insbesondere der Stromdüse zum Lichtbogenschweißen. Das Verfahren zeichnet sich dadurch aus, dass - nach dem Abnehmen des zu ersetzenden Verschleißteils mittels einer Halterung an einer Wartungsstation - der Roboterarm selbst mit einem an diesem vorgesehenen Robotergreifer das abgenommene Verschleißteil aus der Halterung entfernt. Ferner zeichnet sich das Verfahren dadurch aus, dass - vor dem Anbringen des als Ersatz dienenden Verschleißteils - der Roboterarm mit seinem Robotergreifer das ersatzhalber anzubringende Verschleißteil in die Halterung der Wartungsstation einsetzt. Dieses Verfahren kann insbesondere zur Wartung eines Brenners zum Lichtbogenschweißen, nämlich zum Ersetzen einer verschlissenen Stromdüse und auch bedarfsweise zum Ersetzen der Gasdüse eingesetzt werden.

Die erfindungsgemäße Aufgabe wird ferner gelöst durch das Verwenden einer Anlage zur Durchführung eines solchen erfindungsgemäßen Verfahrens, d.h. zum automatisierten Austauschen mindestens eines Verschleißteils des Brenners eines Schweißroboters, wobei die Anlage den Schweißroboter mit einem mehrachsigen Roboterarm und die Wartungsstation im Arbeitsbereich des Roboterarms umfasst.

Durch den zusätzlichen Robotergreifer trägt der Roboterarm des Schweißroboters selbst im Vergleich zu bekannten Lösungen in einem deutlich weitergehenden Ausmaß zur Automatisierung der Anlage und des Verfahrens zum Austauschen (d.h. Auswechseln oder Ersetzen) der Brennerverschleißteile bei.

Der Aufwand und Automatisierungsgrad betreffend die Wartungsstation kann somit minimiert werden, ohne dass ein zusätzlicher Handlingroboter erforderlich wäre. Dies wird überraschend einfach dadurch erreicht, dass der ohnehin bereits vorhandene Roboterarm des Schweißroboters ausgenutzt wird.

Vorzugsweise, aber nicht zwingend, wird der Robotergreifer unmittelbar am Endglied des Roboterarms, d.h. am Glied mit der höchsten Anzahl Freiheitsgraden, befestigt. So kann für den Robotergreifer die gleiche Bewegungsfreiheit wie für den Brenner genutzt werden.

Die erfindungsgemäße Lösung bei der Verwendung der beschriebenen Anlage zum automatisierten Austauschen von Brennerverschleißteilen eignet sich sowohl für Schweißroboter zum fügenden Schweißen, als auch für Schweißroboter mit einem Schneidbrenner zum Trennen (Schneidroboter). Die Lösung eignet sich insbesondere aber nicht ausschließlich zum Auswechseln der Stromdüse eines Brenners zum Lichtbogenschweißen und ebenfalls zum Ersetzen der Gasdüse eines solchen Brenners.

Typischerweise sind bei der Anlage das Endglied und damit auch der vom End-glied getragene Brenner um eine Drehachse positionierbar gelagert. Bei einer derartigen Ausführung ist es zweckmäßig, den Robotergreifer als mechanischen Greifer auszuführen und quer zur Drehachse des Endglieds hieran zu befestigen. Besonders zweckmäßig ist der Robotergreifer als 2-Backen-Parallelgreifer bzw. 2-Finger-Parallelgreifer ausgeführt und derart am Endglied befestigt, dass die Hubrichtung des Parallelgreifers in etwa senkrecht zur Drehachse des Endglieds liegt. Durch die Befestigung quer zur Drehachse bleibt der Wirkbereich des Brenners bzw. die Bewegungsfreiheit der Brennerspitze in Bezug auf die zu schweißenden Teile weitestgehend unbeeinträchtigt durch das vom Robotergreifer eingenommene Volumen. Umgekehrt kann hiermit auch vermieden werden, dass die Bewegungsfreiheit bzw. der Wirkbereich des Robotergreifers durch den Brenner beeinträchtigt wird.

Zur Überprüfung, ob und gegebenenfalls welches Verschleißteil der Robotergreifer handhabt, umfasst die Wartungsstation in einer bevorzugten Ausführung der Anlage einen optischen Sensor, insbesondere eine Gabellichtschranke, der bzw. die vorzugsweise mit der Steuerung des Schweißroboters verbunden und in diese eingebunden ist. Durch einen entsprechenden Sensor kann insbesondere sichergestellt werden, dass die Halterung der Wartungsstation tatsächlich vom Robotergreifer entleert wurde bzw. durch diesen mit einem neuen Verschleißteil bestückt wird. Zudem kann der optische Sensor zur Überprüfung der Brennergeometrie genutzt werden. Alternativ oder ergänzend kann der Robotergreifer selbst einen Sensor aufweisen, welcher zur Erkennung der Wirkstellung des Robotergreifers, z.B. der Position der Greiferbacken, mit der Steuerung des Schweißroboters verbunden ist. Auch mit einem solchen Sensor kann das Halten eines Verschleißteils überprüft werden. So kann z.B. die Bewegungszeit zum vorgenannten optischen Sensor der Wartungsstation eingespart werden.

Es wird bevorzugt vorgesehen, dass die Anlage ein dem Robotergreifer zugängliches Magazin aufweist, aus welchem der Robotergreifer ein neues bzw. überholtes Verschleißteil entnehmen kann. Besonders bevorzugt werden Magazintypen, bei welchen ein neues Verschleißteil selbsttätig nachrückt. So kann insbesondere ein Schachtmagazin zum selbsttätigen Nachrücken durch Schwerkraft vorgesehen werden. Vorzugsweise ist das Magazin seitlich außen an der Wartungsstation angebracht. Hierdurch wird der Montageaufwand verringert. Zudem befindet sich so das Magazin zusammen mit der Wartungsstation im unmittelbaren Wirkbereich des Schweißroboterarms und kann bei drehbarem Endglied. Ein mechanisch einfaches und kostengünstiges Magazin ist insbesondere bei Verwendung einer Wartungsstation mit optischem Sensor zur Überprüfung der Entnahme aus dem Magazin zweckmäßig.

Das erfindungsgemäße Verfahren eignet sich insbesondere für Schweißroboter mit einem Brenner zum Lichtbogenschweißen. Dieser weist eine Stromdüse, welche der mechanischen Führung des Schweißdrahts dient, sowie eine Gasdüse auf, welche der Zuführung von Schutzgas um den Lichtbogen dient. Bei einem derartigen Schweißroboter ist bevorzugt vorgesehen, dass die Halterung der Wartungsstation eine drehbare Schraubhülse zum automatisierten Ab- und Anschrauben der Gasdüse und ferner eine weitere drehbare Schraubhülse zum automatisierten Ab- und Anschrauben der Stromdüse aufweist. Hierbei ist zweckmäßig vorgesehen, dass beide Schraubhülsen formschlüssig, insbesondere durch einen Schlüssel mit entsprechender Schlüsselweite zur Zusammenwirkung mit einer Abflachung, einem Vielkant o.ä., an der Strom- oder Gasdüse zusammenwirken. Durch einen formschlüssigen Eingriff kann auch bei geringer Restverschmutzung, beispielsweise durch Schweißspritzer, das automatisierte Abnehmen und Anbringen noch gewährleistet werden. Dennoch ist die Wartungsstation vorzugsweise ferner mit einer Reinigungsvorrichtung ausgestattet zum automatisierten Reinigen des Brenners, insbesondere zum Reinigen der Gasdüse und/oder der Stromdüse des Brenners. Hierdurch kann u.U. die weniger verschleißanfällige Gasdüse weniger oft ausgewechselt werden, als die Stromdüse.

In zweckmäßiger Ausführung der Anlage ist der Roboterarm des Schweißroboters als 6-achsiger oder 7-achsiger Industrieroboter, insbesondere als Knickarmroboter, ausgeführt. Zweckmäßig weist der Roboterarm einen Halter auf, mittels welchem der Brenner exzentrisch, insbesondere mit Bezug auf die Drehachse des Endglieds, am Endglied befestigt ist. Hierbei ist der Robotergreifer vorzugsweise quer zur Drehachse des Endglieds neben dem Brenner am Halter befestigt und bevorzugt gegenüber dem Brenner winkelversetzt, insbesondere in einem Bereich von etwa 70° bis 180°, vorzugsweise etwa 80°-100° winkelversetzt. Mit dieser Ausführung können auch bereits bestehende Schweißrobotertypen ergänzt bzw. nachgerüstet werden. Insbesondere wird auch mit dieser Anordnung die Beeinträchtigung der Bewegungsfreiheit bzw. der Wirkbereich des Brenners nur minimal oder nicht durch den zusätzlichen Robotergreifer beeinträchtigt.

Die Wartungsstation kann in Bezug auf den Schweißroboter ortsfest im Arbeitsbereich des Roboterarms angeordnet sein oder aber anhand eines geeigneten Antriebssystems durch die Steuerung des Schweißroboters wahlweise bzw. nach Bedarf in den Arbeitsbereich des Schweißroboters fahrbar sein. Beim erstgenannten Ansatz kann eine Wartungsstation auch mehreren Roboterarmen, insbesondere zwei Schweißrobotern, zugeordnet sein. Beim letztgenannten Ansatz kann auch eine größere Anzahl von Schweißrobotern durch ein und dieselbe Wartungsstation bedient werden.

Weitere Einzelheiten, Vorteile und Merkmale der Erfindung lassen sich dem nachfolgenden Teil der Beschreibung entnehmen, in welchem eine bevorzugte Ausführung rein beispielhaft anhand der beigefügten Zeichnungen näher erläutert wird. Hierbei zeigen:
- FIG.1A-1B:: eine Draufsicht und eine Seitenansicht einer Anlage zur Durchführung eines erfindungsgemäßen Verfahrens mit einem Schweißroboter und einer Wartungsstation;
- FIG.2:: eine vergrößerte perspektivische Teilansicht des Schweißroboters aus FIG.1A-1B im Bereich des Brenners und des Endglieds des Schweißroboters;
- FIG.3A-3B:: eine erste und eine zweite vergrößerte Ansicht der Wartungsstation aus FIG.1A-1B;
- FIG.4:: eine vergrößerte perspektivische Ansicht der Brennerspitze mit abgenommener Gasdüse und noch angebrachter Stromdüse sowie einer Halterung zum automatisierten Abnehmen und Anbringen der Verschleißteile;
- FIG.5:: eine vergrößerte Seitenansicht einer Schraubhülse der Halterung aus FIG.4;
- FIG.6:: ein Ablaufdiagramm eines erfindungsgemäßen Verfahrens zum automatisierten Austauschen der Strom- und Gasdüse in einer Anlage gemäß FIG.1A-1B.

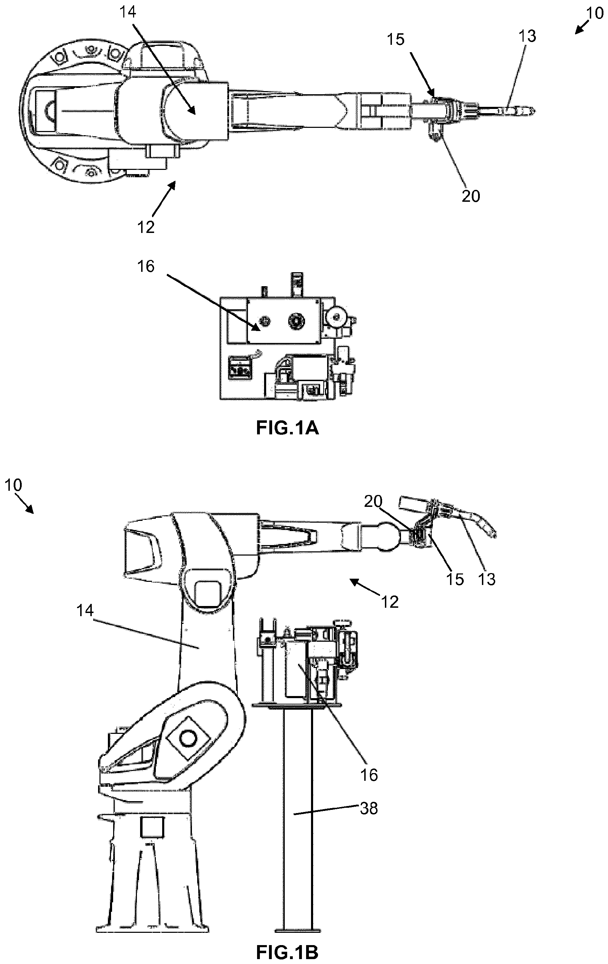

FIG.1A-1B zeigen, allgemein mit 10 bezeichnet, eine Anlage zum robotergestützten Lichtbogenschweißen mit einem Schweißroboter 12. Der Schweißroboter 12 hat als Hauptbestandteile einen Roboterarm 14, einen 6-achsigen Knickarmroboter im gezeigten Beispiel und einen Schweißbrenner 13 (nachfolgend kurz als Brenner 13 bezeichnet), der vom Endglied 15 des Roboterarms 14 getragen wird. In den vorgenannten Aspekten ist der gezeigte Schweißroboter 12 von an sich bekannter Bauweise, beispielsweise vom Typ QIROX ^{®} der Firma Carl Cloos Schweißtechnik GmbH.

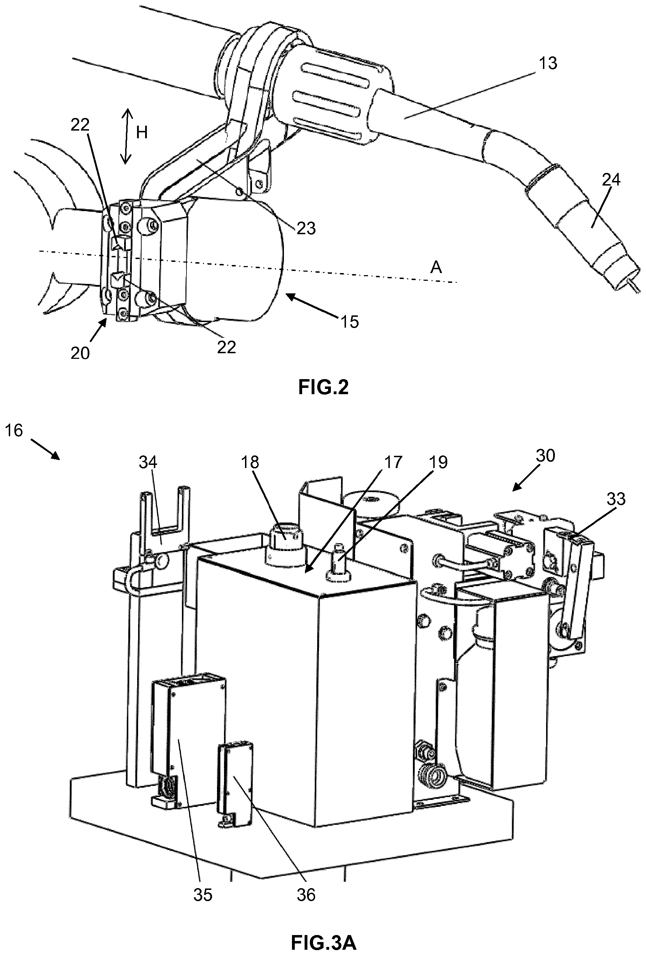

Die Anlage 10 umfasst weiterhin eine im Arbeitsbereich des Roboterarms 14 angeordnete Wartungsstation 16, welche im Zusammenhang mit FIG.3A-3B näher beschrieben wird. Dabei ist am Roboterarm 14, und zwar an dessen Endglied 15, ein Robotergreifer 20 zur Handhabung von Verschleißteilen vorgesehen. Der Robotergreifer 20 am Roboterarm 14 wirkt erfindungsgemäß zur Automatisierung der Wartung des Brenners 13 mit der Wartungsstation 16 zusammen.

FIG.2 zeigt eine bevorzugte Anordnung und Ausführung des Robotergreifers 20. Der Robotergreifer 20 ist bevorzugt als mechanischer 2-Backen-Parallelgreifer (auch 2-Finger-Parallelgreifer) ausgeführt und umfasst zwei speziell geformte Greiferbacken 22, die entlang einer Hubrichtung in bekannter Weise verstellbar sind. Wie aus FIG.2 ersichtlich ist der Robotergreifer 20 bevorzugt mit dieser Hubrichtung im Wesentlichen senkrecht zur Drehachse A des Endglieds 15 am Roboterarm 14 befestigt. In der gezeigten Ausführung ist der Brenner 13 durch einen etwa Z-förmigen speziellen Halter 23 mit Bezug auf die Drehachse A exzentrisch am Endglied 15 befestigt. Bei einer derartigen Ausführung ist der Robotergreifer 20 bevorzugt ebenfalls am Halter 23 des Brenners 13 befestigt und zwar vorzugsweise quer zur Drehachse A und winkelversetzt neben dem Brenner 13 vorzugsweise mit der Hauptrichtung der Greiferbacken 22 in einem Bereich von etwa 60°-180°, insbesondere etwa 90°, winkelversetzt zur Hauptachse des Halters 23 bzw. zur Ebene des Brenners 13. Hierdurch wird gewährleistet, dass die Einsatzmöglichkeiten und Bewegungsfreiheit von Brenner 13 und Robotergreifer 20 sich so wenig wie möglich gegenseitig beeinträchtigen. Der Robotergreifer 20 ist als Aktor bzw. Stellglied in die Steuerung (nicht gezeigt) des Schweißroboters 12 eingebunden.

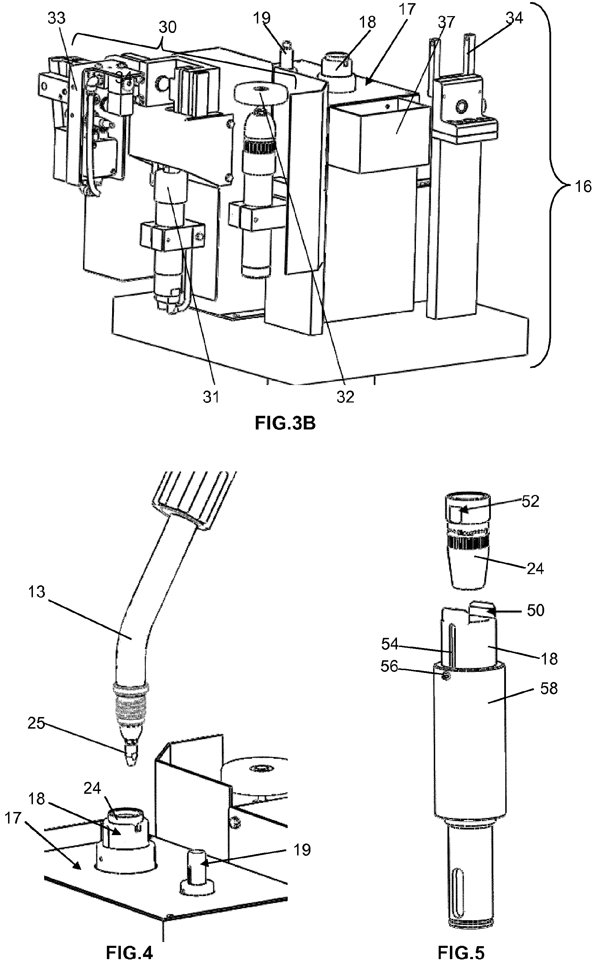

FIG.2 zeigt ferner an der Spitze des Brenners 13 die Gasdüse 24, welche die in FIG.4 näher gezeigte Stromdüse 25 umgibt. Gasdüse 24 und Stromdüse 25 sind zu wartende Verschleißteile des Brenners 13. Zum automatisierten Austauschen der Stromdüse 25 und bei Bedarf auch der Gasdüse 24 wirkt der vorgesehene Robotergreifer 20 mit der Wartungsstation 16 zusammen.

FIG.3A-3B zeigen die wesentlichen Komponenten der Wartungsstation 16. Die Wartungsstation 16 umfasst eine Halterung 17 mit einer großen Schraubhülse 18 und einer kleinen Schraubhülse 19. Die Schraubhülsen 18, 19 sind mittels eines Drehantriebs um ihre Längsachse drehbar zum automatisierten Abschrauben bzw. Anschrauben der Gas- und Stromdüse 24, 25. Die Schraubhülse 18 mit großem Durchmesser dient zum Abnehmen und Anbringen der Gasdüse 24. Die Schraubhülse 19 mit kleinem Durchmesser dient zum Abnehmen und Anbringen der Stromdüse 25, wie am besten aus FIG.4 ersichtlich. Die Wartungsstation 16 umfasst weiterhin eine Reinigungsvorrichtung 30. Wesentliche Bestandteile der Reinigungsvorrichtung 30 sind näher in FIG.3B gezeigt, nämlich eine Baugruppe zur Brennerinnenreinigung 31, eine Baugruppe zur Außenreinigung 32 und einen Drahtabschneider 33. Die Baugruppe zur Brennerinnenreinigung 31 umfasst einen Drehantrieb mit einem rotierenden, runden Messer, welches eine Innenreinigung der Gasdüse 24, insbesondere zur Entfernung von Ablagerungen wie beispielsweise Schweißspritzern. Die Baugruppe zur Außenreinigung 32 umfasst einen Drehantrieb mit einer rotierenden Bürste, mit welcher sowohl die Gasdüse 24, als auch die Stromdüse 25 von außen gereinigt werden kann. Der Drahtabschneider 33 dient zum Entfernen bzw. Zuschneiden des durch die Stromdüse 25 zu führenden Schweißdrahts. Die Baugruppen der Reinigungsvorrichtung 30 werden durch die Robotersteuerung (nicht gezeigt) des Schweißroboters 12 gesteuert.

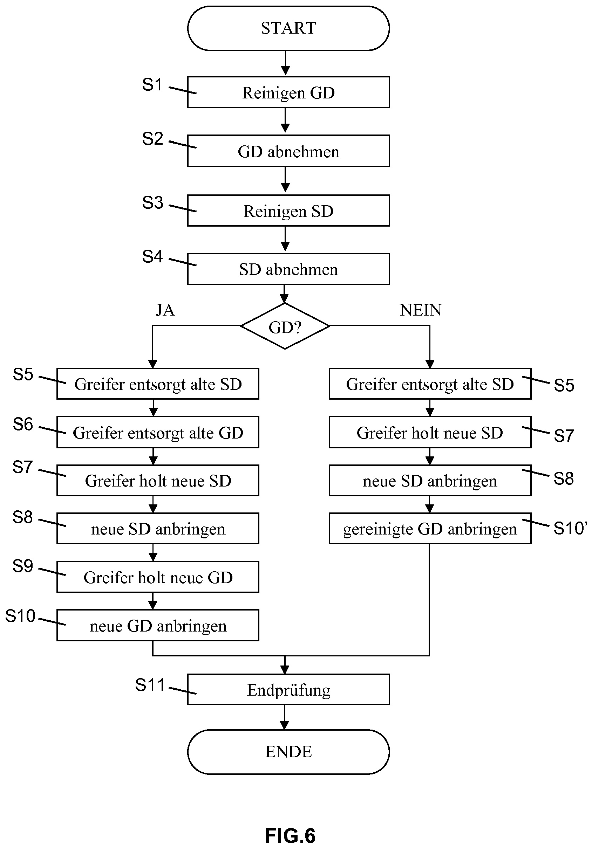

Die Wartungsstation 16 umfasst weiterhin einen optischen Sensor, insbesondere eine Gabellichtschranke 34 zur Überprüfung der programmgemäßen Funktionsweise des Robotergreifers 22 am Roboterarm 14, wie weiter unten zu FIG.6 erläutert. Die Wartungsstation 16 umfasst weiterhin ein erstes, großes Schachtmagazin 35 für Gasdüsen sowie ein zweites, kleines Schachtmagazin 36 für Stromdüsen. Beide Schachtmagazine 35, 36 sind so gestaltet, dass ein neues Verschweißteil jeweils selbsttätig durch Schwerkraft nachrückt und im unteren Bereich des Schachtmagazins 35, 36 seitlich für den Robotergreifer 20 zugänglich, d.h. greifbar und aus dem jeweiligen Magazin 35, 36 entnommen werden kann. Zum Ablegen von verbrauchten Gasdüsen 24 oder Stromdüsen 25 ist ferner an der Wartungsstation ein Auffangbehälter 37 vorgesehen. Im gezeigten Ausführungsbeispiel ist die Wartungsstation 16 mittels eines Ständers ortsfest im Arbeitsbereich des Roboterarms 14 auf einer für den Brenner 13 und den Robotergreifer 20 gut zugänglichen Höhe angebracht.

Wie aus FIG.2 ersichtlich, haben die Greiferbacken 22 des Robotergreifer 20 eine besondere Formgebung mit einer dem größeren Innendurchmesser der Gasdüse 24 angepassten, konvex gekrümmten Außenfläche, und einer dem kleiner Innendurchmesser der Stromdüse 25 angepassten konkaven Klemmbackenfläche. Somit können die größeren Gasdüsen 24 von innen durch Aufspreizen der Greiferbacken 22 gegriffen werden und die kleineren Stromdüsen 25 von außen durch Zusammenfahren der Greiferbacken 22 gegriffen werden. Die Betätigung bzw. der Hubantrieb des Robotergreifers 20 ist vorzugsweise pneumatisch, wodurch insbesondere beim Nachrüsten elektrische oder hydraulische Leitungen außen am Roboterarm 14 vermieden werden.

FIG.4-5 veranschaulichen Aufbau und Funktion der Halterung 17, insbesondere der großen Schraubhülse 18 und der kleinen Schraubhülse 19. Beide Schraubhülsen 18, 19 sind mit einem gemeinsamen Antrieb oder jeweils mit separaten Drehantrieben verbunden und können in beide Drehrichtungen um ihre vertikale Längsachse rotierend angetrieben werden. So kann der Roboterarm 14 den Brenner 13 zunächst mit der Gasdüse 24 in die rotierende große Schraubhülse 18 einfahren, wodurch bei entsprechendem Drehsinn die Gasdüse 24 abgeschraubt wird. Bei umgekehrtem Drehsinn kann der Brenner 13 entsprechend in die rotierende Gasdüse 24 eingeführt werden, so dass diese von der großen Schraubhülse 18 wieder an der Brennerspitze angeschraubt wird. FIG.5 zeigt die große Schraubhülse 18 mit einem gabel- oder maulschlüsselartigen Schlüssel 50 am oberen Ende, welcher mit einer entsprechenden Abflachung 52 an der Gasdüse 24 zusammenwirkt. Alternativ kann auch eine Passfeder an der Düse vorgesehen werden, welche mit einer radial gerichteten Nut am oberen Ende der Schraubhülse zusammenwirkt. Die Schraubhülse 18 ist in einer mit dem Drehantrieb verbundenen Hohlwelle 58 gelagert und darin gegen eine Federbelastung, z.B. durch eine innen in der Hohlwelle 58 angeordnete Spiralfeder, längsverschiebbar und koaxial gelagert. So wird ein federnder Eingriff der Gasdüse 24 ermöglicht. Die rohrartige Schraubhülse 18 weist ferner eine Nut oder ein Langloch 54 auf. In das Langloch 54 greift ein an der Hohlwelle 58 befestigter Querstift 56 zur Drehmomentübertragung ein. Der Querstift ist vorzugsweise als Gewindestift einstellbar ausgeführt. Durch diesen Aufbau wird auf relativ einfache Weise ein automatisiertes Abnehmen und Anbringen der Gasdüse 24 ermöglicht. Aufbau und Wirkweise der kleinen Schraubhülse 19 zum automatisierten Abschrauben und Einschrauben der Stromdüse 25 sind in Ausnahme der angepassten Dimensionierungen analog und werden deshalb nicht näher erläutert.

Anhand des Flussdiagramms in FIG.6, welches einen beispielhaften Verfahrens- bzw. Programmablauf illustriert, wird die Funktionsweise zum automatisierten Austauschen der Stromdüse 25 und gegebenenfalls auch der Gasdüse 24 des Brenners 13 näher erläutert:
In Schritt S1 erfolgt die Reinigung der Gasdüse, wodurch diese ggf. wiederverwendet werden kann. Hierzu fährt der Roboterarm 14 mit dem Brenner 13 die Wartungsstation 16, genauer die Reinigungsvorrichtung 30 an. Der Schweißdraht wird mit dem Drahtabschneider 33 abgeschnitten und in ausreichendem Maß in den Brenner eingefahren. Die am Brenner 13 angebrachte Gasdüse 24 wird mit der Baugruppe zur Innenreinigung 31 zunächst innen und anschließend mit der Baugruppe zur Außenreinigung 32 außen gereinigt, wobei der Roboterarm 14 in allen Zwischenschritten aus Schritt S1 den Brenner 13 entsprechend positioniert.

In Schritt S2 wird die Gasdüse 24 automatisch abgenommen. Der Roboterarm 14 fährt hierzu die große Schraubhülse 18 der Halterung 17 an und fährt mit der Gasdüse 24 koaxial in die rotierende große Schraubhülse 18. Der Schlüssel 50 greift in der Art eines Maulschlüssels in die Abflachung(en) 52 ein und löst die Gasdüse 24 durch Abschrauben. Anschließend kann der Roboterarm 14 ohne die Gasdüse 24 am Brenner 13 hochfahren. Zur Funktionsprüfung fährt der Roboterarm 14 in die Gabellichtschranke 34, welche an die Steuerung des Schweißroboters 12 angeschlossen ist. Hierbei überprüft die Steuerung anhand der Gabellichtschranke 34, ob die Gasdüse 24 tatsächlich entfernt ist.

In Schritt S3 erfolgt die äußerliche Reinigung der nun freigelegten Stromdüse 25 des Brenners 13. Hierzu umrundet die Stromdüse 25 wie auch beim Reinigen der Gasdüse 24 anhand des Roboterarms 14 die rotierende Bürste der Baugruppe zur Außenreinigung 32.

In Schritt S4 wird die Stromdüse 25 automatisch abgenommen. Der Roboterarm 14 fährt hierzu die kleine Schraubhülse 19 der Halterung 17 an und fährt mit der Stromdüse 25 koaxial in die rotierende kleine Schraubhülse 19. Auch hierbei wird durch Gestaltung in der Art eines Maulschlüssels die Stromdüse 25 durch Abschrauben automatisch abgenommen. Anschließend kann der Roboterarm 14 den Brenner 13 ohne die Stromdüse 25 hochfahren. Zur Prüfung fährt der Roboterarm 14 die Gabellichtschranke 34, welche überprüft, ob die Stromdüse 25 tatsächlich entfernt ist.

Im Anschluss entscheidet die Steuerung, ob die Stromdüse 25 und die Gasdüse 24 oder nur die Stromdüse 25 ausgewechselt werden sollen. Gegebenenfalls können auch stets beide Düsen ausgetauscht werden. Wenn die Stromdüse 25 und die Gasdüse 24 ausgewechselt werden sollen, ist der Ablauf gemäß dem linken Ast im Diagramm aus FIG.6, ansonsten gemäß dem rechten Ast im Diagramm aus FIG.6.

In Schritt S5 wird das Endglied 15 zunächst so um die Drehachse A gedreht, dass der Robotergreifer 20 etwa vertikal nach unten zeigt. Anschließend positioniert der Roboterarm 14 den Robotergreifer 20 so, dass dieser die verbrauchte Stromdüse 25 aus der kleinen Schaubhülse 19 greifen kann, fährt hoch und über den Auffangbehälter 37, in welchen die Stromdüse 25 vom Robotergreifer 20 abgeworfen wird.

In Schritt S6 wird anhand des Robotergreifers 20 analog und je nach Bedarf auch die Gasdüse 24 aus der großen Schaubhülse 18 entnommen und in den Auffangbehälter 37 gebracht. Es können auch zwei getrennte Behälter für jeweils einen der beiden Düsentypen vorgesehen werden.

In Schritt S7 wird das Endglied 15 zunächst so um die Drehachse A gedreht, dass der Robotergreifer 20 etwa horizontal seitlich zeigt. Anschließend positioniert der Roboterarm 14 den Robotergreifer 20 so, dass dieser als Ersatz eine neue Stromdüse 25 aus dem kleinen Schachtmagazin 36 greifen und entnehmen kann. Dann fährt der Roboterarm 14 mit dem Robotergreifer 20 in die Gabellichtschranke 34 zur Prüfung, ob die Stromdüse 25 im Greifer ist. Bei positivem Ergebnis fährt der Roboterarm 14 hoch und über die stillstehende kleine Schraubhülse 19, in welchen er die Stromdüse 25 einführt, die dann vom Robotergreifer 20 losgelassen wird.

In Schritt S8 fährt der Roboterarm 14 mit dem Brenner 13 in die im Gegensinn rotierende kleine Schraubhülse 19 bis die neue Stromdüse 25 befestigt ist, was z.B. durch Drehmomentmessung oder Zeitablauf bestätigt werden kann. Anschließend fährt der Roboterarm 14 die Spitze des Brenners 13 zur Gabellichtschranke 34, und die Steuerung prüft, ob die Stromdüse korrekt eingeschraubt wurde.

Im bedarfsweise ausgeführten Schritt S9 fährt der Roboterarm 14 analog zu Schritt S7 zum großen Schachtmagazin 35 und entnimmt anhand des Robotergreifers 20 dort eine neue Gasdüse 24. Dann fährt der Roboterarm 14 zur Gabellichtschranke 34 zur Prüfung, ob die Gasdüse 24 vom Robotergreifer 20 gehalten wird. Bei positivem Ergebnis fährt der Roboterarm 14 über die stillstehende große Schraubhülse 18, in welchen er die Gasdüse 24 einführt, die anschließend vom Robotergreifer 20 losgelassen wird.

Sowohl im Schritt S10, als auch im Alternativschritt S10' fährt der Roboterarm 14 analog zum Schritt S8, jedoch nun zum Anbringen Gasdüse 24 mit dem Brenner 13 in die rotierende große Schraubhülse 18 bis die Gasdüse 25 befestigt ist. Im Schritt S10 wird hierbei die neue bzw. überholte Gasdüse aus dem Schachtmagazin 35 montiert. Im Alternativablauf wird, durch das Auslassen der Schritte S6 und S9, im Schritt S10' die zuvor nicht entnommene, jedoch gereinigte Gasdüse 24 erneut am Brenner 13 montiert. Anschließend fährt der Roboterarm 14, sowohl im Schritt S10, als auch im Alternativschritt S10', die Spitze des Brenners 13 zur Gabellichtschranke 34 zur Prüfung, ob die Gasdüse 24 korrekt eingeschraubt wurde.

Mit dem abschließenden Schritt S11 fährt der Roboterarm 14 die Brennerspitze erneut zur Reinigungsvorrichtung 30, genauer zum Drahtabschneider 33, und fördert den Schweißdraht aus dem Brenner 13, sodass etwa 20mm aus der Stromdüse 25 ragen. Durch den Drahtabschneider 33 wird der Schweißdraht auf eine gewünschte Solllänge abgeschnitten. Der Roboterarm 14 fährt schließlich mit dem Brenner 13 die Gabellichtschranke 34 an, um die korrekte Geometrie des Brenners 13 und des Schweißdrahtes zu überprüfen. Natürlich sind auch vereinfachte oder andere Verfahrensabläufe möglich, soweit im erfindungsgemäßen Sinne der Roboterarm 14 mit dem Robotergreifer 20 wesentlich zur Automatisierung beiträgt, indem er mit dem Robotergreifer insbesondere das abgenommene Verschleißteil, wie z.B. die Stromdüse 25, aus der Halterung 17 entfernt und das ersatzhalber anzubringende Verschleißteil in die Halterung 17 einsetzt. Zum Beispiel können die Schritte S5 und S6 in umgekehrter Reihenfolge erfolgen, oder der Schritt S8 kann dem Schritt S9 vorgezogen erfolgen.

Durch Einbindung der vorgenannten Aktoren in die Steuerung des Schweißroboters 12, insbesondere des Robotergreifers 20 und der Antriebe und des Sensors der Wartungsstation 16, kann die Wartung des Brenners 13 trotz geringem Zusatzaufwand vollautomatisch erfolgen. Die erfindungsgemäße Lösung eignet sich insbesondere aber nicht ausschließlich zur vollautomatischen Wartung von Lichtbogen-Schweißbrennern zum fügenden Schweißen. Sie ist jedoch auch auf Schweißroboter mit einem anderen Brennertyp zum fügenden Schweißen, oder solche mit einem Schneidbrenner übertragbar.

### Bezugszeichenliste

FIG.1A-1B, FIG.2
   - 10: Anlage
   - 12: Schweißroboter
   - 13: Schweißbrenner
   - 14: Roboterarm
   - 15: Endglied
   - 16: Wartungsstation
   - 17: Halterung
   - 18: Große Schraubhülse
   - 19: Kleine Schraubhülse
   - 20: Robotergreifer
   - 22: Greiferbacken
   - 23: Halter
   - 24: Gasdüse
   - H: Hubrichtung
   - A: Drehachse (Endglied)
FIG.3A-3B
   - 16: Wartungsstation
   - 17: Halterung
   - 18: Große Schraubhülse
   - 19: Kleine Schraubhülse
   - 30: Reinigungsvorrichtung
   - 31: Baugruppe Innenreinigung
   - 32: Baugruppe Außenreinigung
   - 33: Drahtabschneider
   - 34: Gabellichtschranke
   - 35: Großes Schachtmagazin
   - 36: Kleines Schachtmagazin
   - 37: Auffangbehälter
   - 38: Ständer
FIG. 4
   - 13: Schweißbrenner
   - 17: Halterung
   - 18: Große Schraubhülse
   - 19: Kleine Schraubhülse
   - 24: Gasdüse
   - 25: Stromdüse
FIG.5
   - 18: Große Schraubhülse
   - 24: Gasdüse
   - 50: Schlüssel
   - 52: Abflachung
   - 54: Langloch/-nut
   - 56: Querstift
   - 58: Hohlwelle
FIG. 6
   - S1: Reinigen Gasdüse (GD)
   - S2: GD abnehmen
   - S3: Reinigen Stromdüse (SD)
   - S4: SD abnehmen
   - S5: Robotergreifer entsorgt alte SD
   - S6: Robotergreifer entsorgt alte GD
   - S7: Robotergreifer holt neue SD
   - S8: neue SD anbringen
   - S9: Robotergreifer holt neue GD
   - S10: neue GD anbringen
   - S10': gereinigte, alte GD anbringen
   - S11: Endprüfung

## Patentansprüche

1. Verfahren zum automatisierten Austauschen mindestens eines Verschleißteils des Brenners eines Schweißroboters (12), insbesondere der Stromdüse (25) zum Lichtbogenschwei-ßen, umfassend:
- Abnehmen (S2; S4) eines zu ersetzenden Verschleißteils mittels einer Halterung (17) an einer Wartungsstation (16);
- Anbringen (S8; S10) eines als Ersatz dienenden Verschleißteils mittels der Halterung;
**dadurch gekennzeichnet, dass** am Roboterarm (14) des Schweißroboters, vorzugsweise an dessen Endglied, ein Robotergreifer (20) vorgesehen ist,
- **dass** der Roboterarm mit dem Robotergreifer das abgenommene Verschleißteil aus der Halterung entfernt (S5; S6) und
- **dass** der Roboterarm mit dem Robotergreifer das als Ersatz anzubringende Verschleißteil in die Halterung einsetzt (S7; S9).

2. Verwendung einer Anlage (10) zur Durchführung eines Verfahrens nach Anspruch 1, wobei die Anlage den Schweißroboter mit dem Roboterarm (14) und die Wartungsstation (16) im Arbeitsbereich des Roboterarms umfasst, und wobei der Roboterarm als mehrachsiger Roboterarm ausgeführt ist.

3. Verwendung einer Anlage nach Anspruch 2, wobei das Endglied (15) bzw. der Brenner (13) um eine Drehachse positionierbar gelagert ist, und der Robotergreifer (20) als mechanischer Greifer ausgeführt und quer zur Drehachse (A) am Endglied befestigt ist, vorzugsweise als 2-Backen-Parallgreifer ausgeführt und mit der Hubrichtung (H) senkrecht zur Drehachse (A) am Endglied befestigt ist.

4. Verwendung einer Anlage nach Anspruch 2 oder 3, wobei die Wartungsstation einen optischen Sensor (34), insbesondere eine Gabellichtschranke, aufweist zur Überprüfung, ob der Robotergreifer (20) ein Verschleißteil (24; 25) handhabt bzw. welches Verschleißteil der Robotergreifer (20) handhabt, wobei der optische Sensor vorzugsweise mit einer Steuerung des Schweißroboters (12) verbunden ist und/oder der Robotergreifer (20) einen Sensor zur Überprüfung der Wirkstellung des Robotergreifers (20) umfasst.

5. Verwendung einer Anlage nach Anspruch 2, 3 oder 4, wobei die Anlage (10) ein dem Robotergreifer (20) zugängliches Magazin (34; 35) zum Entnehmen eines Verschleißteils aufweist, in welchem ein neues Verschleißteil jeweils selbsttätig nachrückt, insbesondere ein Schachtmagazin (34; 35) zum selbsttätigen Nachrücken durch Schwerkraft, welches vorzugsweise seitlich außen an der Wartungsstation (16) montiert ist.

6. Verwendung einer Anlage nach einem der Ansprüche 2 bis 5, wobei der Brenner zum Lichtbogenschweißen mit einer Stromdüse (25) zur mechanischen Führung eines Schweißdrahts sowie einer Gasdüse (24) zur Zuführung von Schutzgas ausgestattet ist, und die Halterung (17) eine drehbare Schraubhülse (18) zum automatisierten zum Ab- und Anschrauben der Gasdüse (24) aufweist, und die Wartungsstation eine weitere drehbare Schraubhülse (19) zum automatisierten Ab- und Anschrauben der Stromdüse (25) aufweist, wobei die Schraubhülsen formschlüssig mit dem jeweiligen Verschleißteil (24; 25) zusammenwirken.

7. Verwendung einer Anlage nach Anspruch 6, wobei die Wartungsstation eine Reinigungsvorrichtung (30) zum automatisierten Reinigen des Brenners, insbesondere der Gasdüse (24) und der Stromdüse (25) aufweist.

8. Verwendung einer Anlage nach einem der vorhergehenden Ansprüche 2 bis 7, wobei der Roboterarm (14) als 6-achsiger oder 7-achsiger Industrieroboter, insbesondere als Knickarmroboter, ausgeführt ist und einen Halter (23) aufweist mittels welchem der Brenner (13) exzentrisch, insbesondere mit Bezug auf die Drehachse (A) des Endglieds, am Endglied befestigt ist, und der Robotergreifer (20) quer zur Drehachse (A) und winkelversetzt neben dem Brenner (13) am Halter (23) befestigt ist.

9. Verwendung einer Anlage nach einem der vorhergehenden Ansprüche 2 bis 8, wobei die Wartungsstation (16) ortsfest im Arbeitsbereich des Roboterarms (14) angeordnet ist oder durch die Steuerung des Schweißroboters wahlweise in den Arbeitsbereich fahrbar ist.

## Claims

1. Method for the automated replacement of at least one wearing component of a torch of a welding robot (12), in particular the contact tip (25) for arc welding, comprising:
- removing (S2; S4) a wearing component to be replaced by means of a holder (17) at a maintenance station (16) ;
- attaching (S8; S10) a wearing component serving as a replacement by means of the holder;
**characterized in that** a robot gripper (20) is provided on the robot arm (14) of the welding robot, preferably on the end member thereof,
- **that** the robot arm removes, with the robot gripper, the wearing component detached from the holder (S5; S6) and
- **that** the robot arm inserts, with the robot gripper, the wearing part to be attached as a replacement into the holder (S7; S9).

2. Use of a system (10) for carrying out a method according to claim 1, wherein the system comprises the welding robot having the robot arm (14) and the maintenance station (16) in the working area of the robot arm and wherein the robot arm is designed as a multi-axis robot arm.

3. Use of a system according to claim 2, wherein the end member (15) or the torch (13) is mounted for positioning about an axis of rotation and the robot gripper (20) is designed as a mechanical gripper and mounted to the end member transversely to the axis of rotation (A) and is designed preferably as a 2-jaw parallel gripper and mounted to the end member with the lift direction (H) perpendicular to the axis of rotation (A).

4. Use of a system according to claim 2 or 3, wherein the maintenance station comprises an optical sensor (34), in particular a fork light barrier, to check whether a wearing component (24; 25) is being handled by the robot gripper (20) or which wearing component is being handled by the robot gripper (20), wherein the optical sensor is preferably connected to a control unit of the welding robot (12) and/or the robot gripper (20) comprises a sensor for checking the operating position of the robot gripper (20).

5. Use of a system according to claim 2, 3 or 4, wherein the system (10) comprises a magazine (34; 35) the robot gripper (20) can access for the withdrawal of a wearing component, in which magazine a fresh wearing component advances automatically, in particular a shaft magazine (34; 35) for self-advancing by gravity, which is preferably mounted laterally on the outside of the mounting station (16).

6. Use of a system according to any one of claims 2 to 5, wherein the torch for arc welding is equipped with a contact tip (25) for mechanically guiding a welding wire, as well as a gas nozzle (24) for supplying inert gas, and wherein the holder (17) comprises a rotatable screw sleeve (18) for automated unscrewing and screwing the gas nozzle (24) and the maintenance station comprises another rotatable screw sleeve (19) for automated unscrewing and screwing the contact tip (25), wherein the screw sleeves cooperate with the respective wearing component (24; 25) in a form-locking manner.

7. Use of a system according to claim 6, wherein the maintenance station comprises a cleaning device (20) for automated cleaning of the torch, in particular the gas nozzle (24) and the contact tip (25).

8. Use of a system according to any one of the preceding claims 2 to 7, wherein the robot arm (14) is designed as a 6-axis or 7-axis industrial robot, in particular articulated arm robot, and comprises a holder (23) by means of which the torch (13) is eccentrically fixed to the end member, in particular in relation to the axis of rotation (A) of the end member, and the robot gripper (20) is fastened to the holder (23) transversely to the axis of rotation (A) and angularly offset next to the burner (13).

9. Use of a system according to any one of the preceding claims 2 to 8, wherein the maintenance station (16) is arranged stationarily in the working area of the robot arm (14) or can optionally be moved into the working area by the control unit of the welding robot.

## Revendications

1. Méthode d'échange automatisé d'une pièce d'usure de la torche de soudage d'un robot de soudage (12), en particulier d'un tube de contact (25) pour le soudage à l'arc, comprenant:
- détacher (S2; S4) une pièce d'usure à remplacer au moyen d'un support (17) à un poste de maintenance (16) ;
- attacher (S8; S10) une pièce d'usure servant de remplacement au moyen du support;
**caractérisé en ce qu'**une pince de robot (20) est prévue sur le bras de robot (14) du robot de soudage, de préférence sur l'élément d'extrémité de celui-ci,
- **que** le bras du robot enlève, à l'aide de la pince de robot, la pièce d'usure détachée du support (S5; S6) et
- **que** le bras de robot insère, à l'aide de la pince de robot, la pièce d'usure à attacher en remplacement dans le support (S7; S9).

2. Utilisation d'un système (10) pour la mise en œuvre d'une méthode selon la revendication 1, le système comprenant le robot de soudage avec le bras de robot (14) et le poste de maintenance (16) dans la zone de travail du bras de robot et le bras de robot étant conçu comme un bras de robot à plusieurs axes.

3. Utilisation d'un système selon la revendication 2, dans laquelle l'élément d'extrémité (15) ou la torche de soudage (13) est montée pour être positionné autour d'un axe de rotation et la pince de robot (20) est conçue comme une pince mécanique et fixée à l'élément d'extrémité transversalement à l'axe de rotation (A), et est conçue de préférence comme une pince parallèle à deux mâchoires et fixée à l'élément d'extrémité avec la direction de levage (H) perpendiculaire à l'axe de rotation (A).

4. Utilisation d'un système selon la revendication 2 ou 3, dans laquelle le poste de maintenance comprend un capteur optique (34), en particulier une barrière lumineuse à fourche, pour vérifier si une pièce d'usure (24; 25) est manipulée par la pince de robot (20) ou quelle pièce d'usure est manipulée par la pince de robot (20), le capteur optique étant de préférence connecté à une unité de commande du robot de soudage (12) et/ou la pince de robot (20) comprend un capteur pour vérifier la position de fonctionnement de la pince de robot (20).

5. Utilisation d'un système selon la revendication 2, 3 ou 4, dans laquelle le système (10) comprend un magasin (34; 35) auquel la pince de robot (20) peut accéder pour le retrait d'une pièce d'usure, dans lequel un nouveau pièce d'usure avance automatiquement, en particulier un magasin à puits (34; 35) pour l'autoavancement par gravité, qui est de préférence monté latéralement à l'extérieur de la station de maintenance (16) .

6. Utilisation d'un système selon l'une quelconque des revendications 2 à 5, dans laquelle la torche pour le soudage à l'arc est équipée d'un tube de contact (25) pour guider mécaniquement un fil de soudage, ainsi que d'une buse de gaz (24) pour l'alimentation en gaz inerte, et dans lequel le support (17) comprend un manchon à vis rotatif (18) pour le dévissage et le vissage automatisés de la buse de gaz (24) et le poste de maintenance comprend un autre manchon à vis rotatif (19) pour le dévissage et le vissage automatisés du tube de contact (25), les manchons à vis coopérant avec la pièce d'usure respective (24; 25) par liaison de forme.

7. Utilisation d'un système selon la revendication 6, dans laquelle la station de maintenance comprend un dispositif de nettoyage (20) pour le nettoyage automatisé de la torche, en particulier de la buse de gaz (24) et du tube de contact (25).

8. Utilisation d'un système selon l'une quelconque des revendications précédentes 2 à 7, dans laquelle le bras de robot (14) est conçu comme un robot industriel à 6 ou 7 axes, en particulier un robot à bras articulé, et comprend un support (23) au moyen duquel la torche (13) est fixée de manière excentrique à l'élément d'extrémité, en particulier par rapport à l'axe de rotation (A) de l'élément d'extrémité, et la pince de robot (20) est fixée au support (23) transversalement à l'axe de rotation (A) et décalée angulairement à côté de la torche (13).

9. Utilisation d'un système selon l'une quelconque des revendications précédentes 2 à 8, dans laquelle le poste de maintenance (16) est disposé de manière fixe dans la zone de travail du bras de robot (14) ou peut être déplacé, au choix, dans la zone de travail par la commande du robot de soudage.
